Europäisches Patentamt

European Patent Office

Office européen des brevets

(11) Publication number: **0 016 653**

**B1**

# EUROPEAN PATENT SPECIFICATION

(45) Date of publication of patent specification: **05.09.84**

(51) Int. Cl.³: **B 29 D 7/24**

(21) Application number: **80300902.6**

(22) Date of filing: **21.03.80**

(54) Method and apparatus for transverse stretching of a film or web.

(30) Priority: **22.03.79 JP 34027/79**

(43) Date of publication of application:
**01.10.80 Bulletin 80/20**

(45) Publication of the grant of the patent:
**05.09.84 Bulletin 84/36**

(84) Designated Contracting States:
**DE FR GB IT NL**

(56) References cited:
**GB-A- 849 436**
**US-A-2 778 057**
**US-A-2 988 772**

(73) Proprietor: **NIPPON PETROCHEMICALS
COMPANY LIMITED
Nishi-shinbashi 1-chome Minato-ku
Tokyo (JP)**

(73) Proprietor: **POLYMER PROCESSING RESEARCH
INSTITUTE LIMITED
9-2 Kaga 1-chome Itabashi-ku
Tokyo (JP)**

(72) Inventor: **Yazawa, Masahide
25-15, Higashi 2-chome
Kunitachi-shi Tokyo (JP)**
Inventor: **Tani, Haruhisa
3-10-18-402, Takashimadaira
Itabashi-ku Tokyo (JP)**
Inventor: **Kurihara, Kazuhiko
3-11-5-1002, Takashimadaira
Itabashiku Tokyo (JP)**
Inventor: **Yazawa, Hiroshi
1-1-1, Fujimidai
Kunitachi-shi Tokyo (JP)**

(74) Representative: **Williams, John Francis et al
J.F. Williams & Co 34 Tavistock Street
London WC2E 7PB (GB)**

Courier Press, Leamington Spa, England.

**Description**

This invention relates to a method of effecting a transverse stretch or elongation of a fibrous web or film-like material and to an apparatus for carrying this method into practice.

Many methods and apparatus have been proposed for stretching a fibrous or film material monoaxially in a transverse direction. A typical example known in the art is a tentering system designed to grip the longitudinal edges or selvedges of an elongate sheet material and stretch this material transversely while it is heated. Such conventional devices are rather costly and space-consuming. Furthermore, they suffer from the drawback that the magnification of stretch of a given material, particularly where this material is non-fibrous such as a plastic film, is limited by the rupture which would take place at areas of the material where longitudinal stresses are created during progressive transverse stretching.

For example, British Patent No. 849436 describes a lateral stretching machine for synthetic polymer films in which a pair of pulleys are disposed at an acute angle to each other and engage the film at their area of closest proximity. The selvedges of the film are gripped by belts passing over the pulleys and as a result, the film is stretched laterally, for example to three times its original width.

US Patent No. 2778057 also describes a lateral stretching machine of different construction. In this machine the selvedges of the film are gripped at both sides between a pair of discs which rotate in the same plane as the film. The discs of each pair are angled so that the film is only gripped while passing around part of the disc circumference. In order to provide for adequate stretching, the film may pass through a number of pairs of discs in sequence.

The present invention seeks to provide a novel method of and apparatus for effecting a monoaxial (uniaxial), transverse stretching of a fibrous as well as film-like material of organic synthetic thermo-plastic polymer which will reduce or eliminate the foregoing drawbacks of the prior art.

According to a first aspect of the invention, there is provided a method of transverse stretching of a longitudinally running continuous film, fibrous web or the like of organic synthetic thermoplastic polymeric material comprising gripping the film, web or the like (M) at its opposite selvedges, stretching the film, web or the like (M) transversely while heating it, and releasing the stretched film, web or the like (M) to allow it to cool and set, characterised in that the film, web or the like (M) is stretched by (a) gripping the selvedges respectively between (i) the periphery of each of a pair of symmetrically disposed pulleys of substantially the same dimensions rotating at substantially the same peripheral speed in the same plane but in opposite directions and (ii) each of a pair of endless belts trained around, and running with the respective pulley, the pulleys and the belts forming two divergent arcuate paths therebetween, and (b) moving the selvedge along the respective arcuate paths over a predetermined circumferential distance of from approximately a quarter to approximately a half of the full circumference of the pulleys.

According to a second aspect of the invention, there is provided apparatus for transverse stretching of a longitudinally running continuous film, fibrous web or the like of an organic synthetic thermoplastic polymeric material comprising means for gripping the film, web or the like (M) between its selvedges and for stretching the film, web or the like (M) transversely, means (H) for heating the film, web or the like (M) during stretching, and means (29) for releasing the stretched film, web or the like (M) to allow it to cool and set, characterised in that the gripping and stretching means (11, 12, 17, 18) comprise a pair of pulleys (11, 12) of substantially the same dimensions disposed symmetrically in horizontal alignment and rotatable at substantially the same peripheral speed but in opposite directions, each pulley having a peripheral groove (27), and two endless belts (17, 18) each trained around the respective pulleys (11, 12) and of complementary cross section to the cross section of the grooves (27) and engaging therein, the pulleys (11, 12) and the belts (17, 18) forming two divergent arcuate paths and cooperating in gripping opposite selvedges of the film, web or the like (M) therebetween and moving the selvedges along the respective arcuate paths over a predetermined distance of from approximately a quarter to approximately a half of the full circumference of the pulleys (11, 12) thereby stretching the film, web or the like (M) transversely.

The invention will now be described in greater detail, by way of example, with reference to the drawings, in which:—

Figure 1 is a perspective view of a transverse stretching apparatus constructed in accordance with the invention;

Figure 2 is a front elevation of the apparatus of Figure 1;

Figure 3 is a side elevation of the apparatus of Figure 1;

Figure 4 is a cross-sectional view taken along the line IV—IV of Figure 2;

Figure 5 is a modified form of apparatus according to the invention;

Figure 6 is a front elevation of this modified apparatus; and

Figure 7 is a cross-sectional view taken along the line VII—VII of Figure 6.

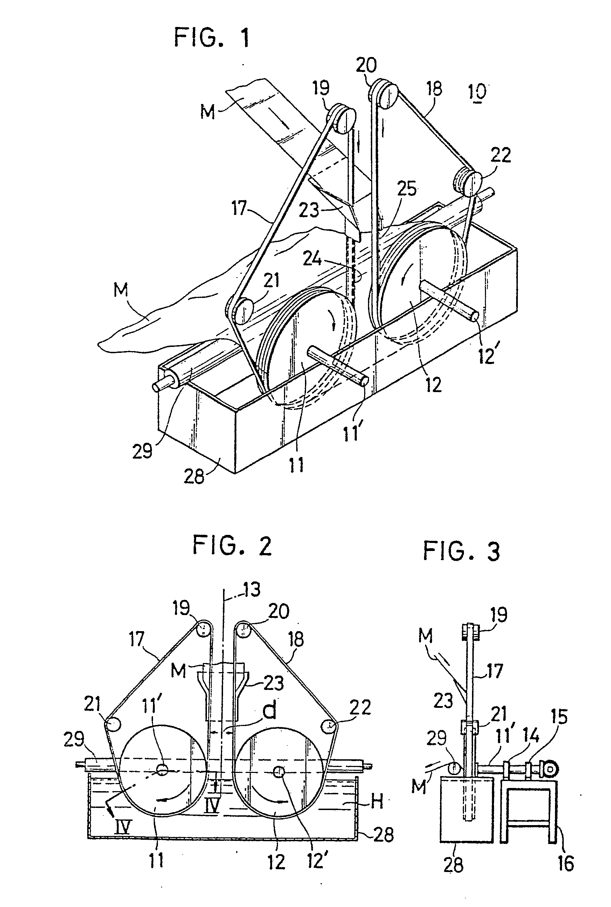

In Figure 1, there is shown a transverse stretching apparatus 10 embodying the invention. The apparatus 10 comprises a pair of pulleys 11, 12 of substantially the same dimensions disposed symmetrically in horizontal alignment across a reference centre line 13 (Figure 2) and rotative in the same plane but in opposite directions as indicated by the arrows. For purposes of illustration, the pulleys 11, 12 are shown to be rotatable in a substantially vertical common plane, although this plane of rotation may be varied anywhere between perpendicular to horizontal. Rotation in the vertical plane as shown is preferred for reasons of space-saving and ease of installation. The pulleys 11, 12 are supported on their respective shafts 11', 12' for rotation therewith, the shafts 11', 12' extending horizontally and supported in bearings 14, 15 on a rack 16, as shown in Figure 3. A pair of endless belts 17 and 18 of a "V" cross section are guided around their respective pulleys 11 and 12 and around respective first guide rollers 19, 20 and respective second guide rollers 21, 22 respectively.

Either the pulleys 11, 12 or the belts 17, 18 or both may be driven by a drive source or associated actuating means (not shown), but in any event the pulleys 11, 12 must be rotated at substantially the same peripheral speed to effect uniform stretching of a material $M$.

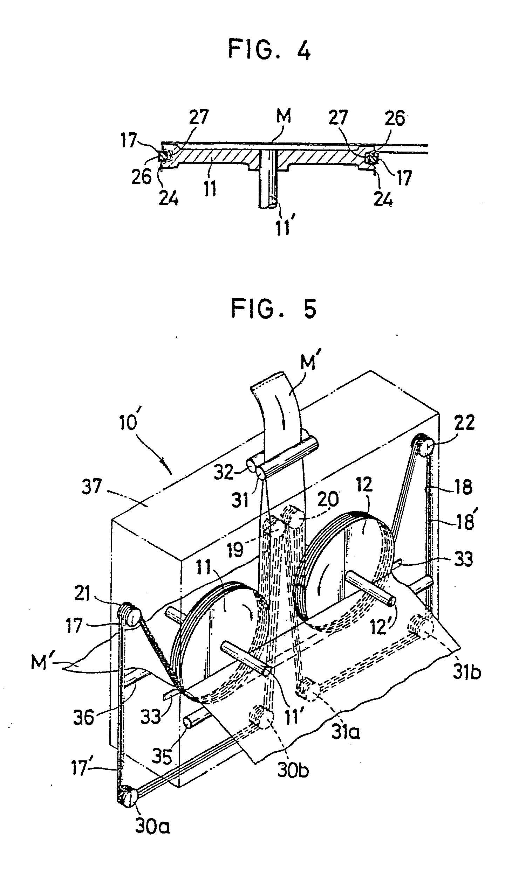

In the apparatus shown in Figures 1 to 4, the material $M$ to be stretched is in the form of an elongate sheet having a predetermined width. The sheet material $M$ is fed to the apparatus 10 along the belts 17, 18 which are moving downwards substantially vertically to the apparatus 10 and is bent along both selvages thereof inwardly against the belts 17, 18 by a suitable selvage folding means such as is shown at 23. The folded selvages 24, 25 of the sheet $M$ are then introduced between the pulleys 11, 12 and the belts 17, 18 respectively, and are each gripped by the V-section 26 of each belt engaging into a groove 27 formed in the periphery of each pulley, the groove 27 being complementary in shape to the V-section 26, as shown in Figure 4. The sheet $M$ thus gripped is subjected to transverse stretching which progresses in an area defined by two divergently arcuate paths or lines of engagement between the respective pulleys and belts over a predetermined circumferential length of the pulleys 11, 12 measuring between the point of contact of the belts 17, 18 with the pulleys 11, 12 and the point of departure of the belts 17, 18 from the pulleys 11, 12. The length of these arcuate paths may be varied according to the extent to which the material $M$ is stretched as desired and may normally range from a quarter to a half of the full pulley circumference. The magnification of stretch is thus determined by the range of the arcuate paths which may be chosen for an effective transverse length $d$ of the material $M$, and it may be controlled expediently by adjusting the distance between the shafts 11' and 12' of the pulleys 11 and 12 of a given diameter as well as the angular position of the second guide rollers 21 and 22 relative to the axes of the pulleys 11 and 12, respectively.

The sheet material $M$ gripped between the belts 17, 18 and the pulleys 11, 12 is subjected to a relatively low tension during its movement in the area between the first quarters of the circumference of the pulleys where the stretching force is applied by the belts 17, 18. As the material $M$ advances into the second quarter region of the pulley circumferences, and travels in a reverse direction, the magnification of stretch increases with an increase in the tension which in this region is applied by the pulleys, the selvedges 24, 25 of the material being held against the rigid peripheries of the pulleys. This ensures stable anchoring of the material $M$ in place between the belts and the pulleys, eliminating the tendency of the gripped selvedges 24, 25 of the material $M$ to slip out of engagement therebetween.

The first guide rollers 19, 20 are positioned such that the opposite selvedges 24, 25 of the material $M$ to be gripped on entry to the apparatus 10 may extend substantially in parallel relation.

Designated at 28 is a vessel containing a liquid heating medium $H$ to a level substantially flush with the axial line of the pulleys 11, 12, as shown in Figure 2.

There is provided a roll member 29 disposed behind the pulleys 11, 12 opposite to the rack 16, the member 29 being adapted to withdraw the stretched portion of the material $M$ after it has undergone substantially a semicircumferential stretching under heated conditions.

Finally the stretched material M is released to allow it to cool and set.

Illustrated in Figures 5—7 inclusive is a modified form of transverse stretching apparatus 10' according to the invention, wherein the same reference numerals and characters are used to refer to the same or like parts as appear in Figures 1—4.

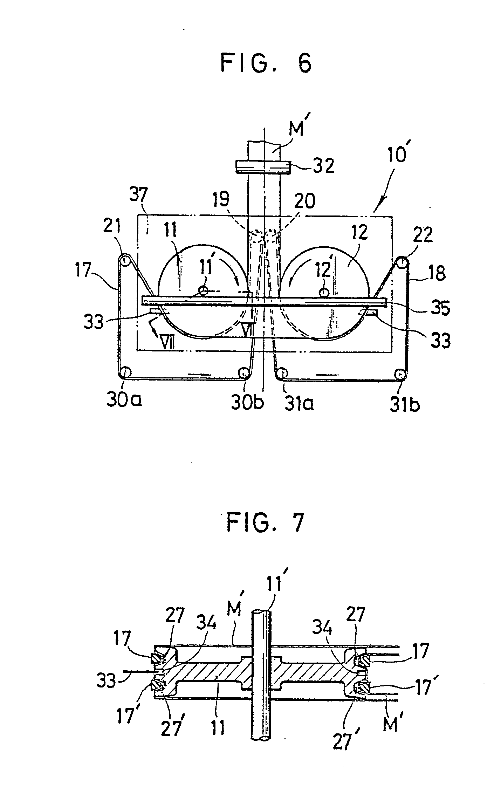

The endless V-belts 17, 18, as shown in Figures 5 and 6, are arranged to maintain engagement with a substantially semicircumferential area of the pulleys 11, 12 as in the case of the previously described embodiment. The belts 17, 18 are trained around the first guide rollers 19, 20 and the second guide rollers 21, 22 respectively, and further around additional sets of rollers 30$a$, and 30$b$ and 31$a$, 31$b$ that are disposed in horizontal alignment below their respective associated pulleys 11, 12.

The modified apparatus 10' functions basically in the same way as the first embodiment 10, but is particularly useful for handling a fibrous or film-like material $M'$ of a tubular form, for which purpose there are provided additional endless V-belts 17', 18' for engagement with a corresponding additional groove 27' formed in the periphery of the pulleys 11, 12...

Flattened tubular material $M'$ is fed between pinch rollers 31, 32 and advanced into the apparatus 10', where-upon the tubular web $M'$ encases or envelops the first guide rollers 19, 20 and a portion of each of the endless belts 17, 17' and 18, 18', so that the tubular web *M'* is spread to permit portions of its periphery (corresponding to selvedges 24, 25) to be gripped in place from both inside and outside between the dual belts 17, 17', 18, 18' and the dually grooved pulleys 11, 12, as shown in Figures 5 and 6. The tubular material *M'* then undergoes monoaxial, transverse stretching in the manner already described.

A cutter 33 is provided in the path of each of the belts 17, 18 adjacent to the position where the belts 17, 18, 17', 18' depart from the pulleys 11, 12 or the stretching of the material *M'* terminates. The cutters 33 are each received in a recess 34 formed in the periphery of each of the pulleys 11, 12 between the dual grooves 27, 27'. The cutters 33 are adapted to sever the selvedge portions of the tubular web *M'* upon completion of the intended stretching so that the tubular web *M'* is slit into two halves for withdrawal one over a roll member 35 at the front and the other over a roll member 36 at the back of the pulleys 11, 12 respectively, as shown in Figure 5. Thereafter the stretched material *M'* is released to allow it to cool and set.

Designated at 37 is a casing surrounding the pulleys 11, 12 and accommodating a suitable heating medium such as live steam for heating the tubular material *M'*.

The heating medium in the practice of the invention may be liquid and steam, as illustrated, or may be hot air or radiant heat, whichever is more convenient for a given material and for given stretching conditions.

The magnification or extent to which the material *M'* is to be stretched may be adjusted by varying the distance between the two pulley shafts 11' and 12' and the angular position of the second guide rollers 21 and 22 with respect to the axes of the pulleys 11 and 12, respectively, as described in connection with the first apparatus 10 shown in Figures 1—4.

It is known in the art that when a film is stretched monoaxially while it is allowed to contact freely transversely of the direction of stretch, the resulting stretched film has a thickness and a width each corresponding to

$$\frac{1}{\sqrt{R}}$$

of the original where R is the magnification of stretch.

According to the inventive concept in which a starting film is subjected to transverse stretching while progressing in an area defined by two divergent arcuate paths, the film will undergo satisfactory monoaxial transverse stretching if the condition of

$$\cos \theta < \frac{1}{\sqrt{\gamma}}$$

is met where $\theta$ is the angle of rotation of pulleys 11, 12 initiating at the horizontal line connecting the centre axes of the two pulleys 11 and 12 and $\gamma$ is the magnification of stretch; a unit length (which is assumed to be 1) of the unstretched starting film is reduced to a length equal to $\cos \theta$ when the stretching has been completed.

However, if the condition is

$$\cos \theta > \frac{1}{\sqrt{\gamma}}$$

then the film receives, in addition to transverse stretching tension, another tension, exerted in the longitudinal direction. In this case molecular orientation of the film will occur in the longitudinal direction too or the film can often become ruptured if the magnification of stretch is increased. It follows therefore that the pulleys must have a diameter such that the stretching terminates at a pulley position defined by

$$\cos \theta \leq \frac{1}{\sqrt{\gamma}}$$

where the belts are released from the pulleys. In such instances, the stretched film should be withdraw at such a speed and in such a manner as to hold the stretched film under minimum tension by, for example, providing a suitable warp material where the selvedge portions of the film, which remain unchanged in length, sag.

It has now been found that transverse stretching can take place at an increased angle of rotation $\theta$, effectively utilizing the semi-circumference of the pulley, if an excess rate of unstretched film is fed in the form of a film with fine transverse creases or is fed by means of pulleys and belts having mutually engaging teeth or corrugated surfaces for gripping of the film. Assuming that the rate of excess feed is K, the angle of rotation $\theta$ of the pulley without risk of film rupture lies in the range represented by the formula

$$\cos \theta = \frac{K}{\sqrt{\gamma}}$$

It follows therefore that with the rate of stretch selected to be 9 times, the angle of rotation can be as great as 0 180° at an excess feed rate K=3, as compared to the case where no such excess is provided in which instances the angle of rotation $\theta$ is as small as 70° or 109°.

It has also been found that a starting film with a series of continuous or discrete transverse slits extending transversely between its opposite blank selvedges can be transversely stretched in an area defined by substantially half the circumference of the pulleys as illustrated.

## Claims

1. A method of transverse stretching of a longitudinally running continuous film, fibrous web or the like of organic synthetic thermoplastic polymeric material comprising gripping the film, web or the like (M) at its opposite selvedges, stretching the film, web or the like (M) transversely while heating it, and releasing the stretched film, web or the like (M) to allow it to cool and set, characterised in that the film, web or the like (M) is stretched by (a) gripping the selvedges respectively between (i) the periphery of each of a pair of symmetrically disposed pulleys of substantially the same dimensions rotating at substantially the same peripheral speed in the same plane but in opposite directions and (ii) each of a pair of endless belts trained around, and running with the respective pulley, the pulleys and the belts forming two divergent arcuate paths therebetween, and (b) moving the selvedges along the respective arcuate paths over a predetermined circumferential distance of from approximately a quarter to approximately a half of the full circumference of the pulleys.

2. A method as claimed in claim 1, in which the starting film (M') is in tubular form, is gripped at each of the selvedge portions from both inside and outside between the respective pulleys and belts while it is stretched and is cut open at the selvedge portions upon completion of the stretching.

3. A method as claimed in claim 1 or 2, in which the film, web or the like (M) is provided with a series of continuous slits extending transversely between opposite blank selvedges thereof.

4. A method as claimed in claim 1 or 2, in which the film, web or the like (M) is provided with a series of discrete slits extending transversely between opposite blank selvedges thereof.

5. Apparatus for transverse stretching of a longitudinally running continuous film, fibrous web or the like of an organic synthetic thermoplastic polymeric material comprising means for gripping the film, web or the like (M) between its selvedges and for stretching the film, web or the like (M) transversely, means (H) for heating the film, web or the like (M) during stretching, and means (29) for releasing the stretched film, web or the like (M) to allow it to cool and set, characterised in that the gripping and stretching means (11, 12, 17, 18) comprise a pair of pulleys (11, 12) of substantially the same dimensions disposed symmetrically in horizontal alignment and rotatable at substantially the same peripheral speed but in opposite directions, each pulley having a peripheral groove (27), and two endless belts (17, 18) each trained around the respective pulley (11, 12) and of complementary cross section to the cross section of the grooves (27) and engaging therein, the pulleys (11, 12) and the belts (17, 18) forming two divergent arcuate paths and cooperating in gripping opposite selvedges of the film, web or the like (M) therebetween and moving the selvedges along the respective arcuate paths over a predetermined distance of from approximately a quarter to approximately a half of the full circumference of the pulleys (11, 12) thereby stretching the film, web or the like (M) transversely.

6. Apparatus as claimed in claim 5, in which each of the pulleys (11, 12) is further provided with a peripheral groove (27') engageable with a respective additional belt (17', 18') for releasably gripping a tubular film, web or the like (M') to be stretched.

7. Apparatus as claimed in claim 6, in which the film is tubular and a cutter (33) is interposed between the dual peripheral grooves (17, 27') for cutting open the tubular film, web or the like (M') at each of the selvedges upon completion of stretching.

## Patentansprüche

1. Verfahren zum Dehnen in Querrichtung einer in Längsrichtung laufenden ununterbrochenen Bahn, z.B. eines Films oder eines Faser-Gewebes, aus organischem, synthetischem, thermoplastischem Polymer-Material, bei dem die Bahn (M) an ihren einander gegenüberliegenden Kanten ergriffen, in Querrichtung gedehnt und unter Wärmeeinfluß freigegeben wird, so daß sie sich abkühlen und festigen kann, dadurch gekennzeichnet, daß die Bahn (M) dadurch gedehnt wird, daß (a) die Kanten zwischen (i) der Peripherie zweier symmetrisch angordneter Räder, die im wesentlichen die gleichen Ausmaße haben und sich mit im wesentlichen gleicher Umfangsgeschweindigkeit in derselben Ebene aber in unterschiedlichen Richtungen drehen, und (ii) zwei endlosen Riemen ergriffen werden, die um die Räder herumlaufen und mit diesen mitlaufen, wobei die Räder und die Riemen zwei auseinanderlaufende, bogenförmige Wege zwischen sich bilden, und daß (b) die Kanten auf den bogenförmigen Wegen über ein vorgegebenes Umfangstück von etwa einem Viertel bis etwa der Hälfte des vollen Radumfanges bewegt werden.

2. Verfahren nach Anspruch 1, dadurch gekennzeichnet, daß der Ausgangsfilm (M') in Schlauchform vorliegt und an den beiden Kanten von innen und außen zwischen den Rädern und Riemen ergriffen ist, während er gedehnt wird, und daß er in den Kantenbereichen nach Beendigung des Dehnens aufgeschnitten wird.

3. Verfahren nach Anspruch 1 oder 2, dadurch gekennzeichnet, daß die Bahn (M) mit einer Reihe fortlaufender Schlitze versehen ist, die sich in Querrichtung zwischen einander gegenüberliegenden, unversehrten Kanten erstrecken.

4. Verfahren nach Anspruch 1 oder 2, dadurch gekennzeichnet, daß die Bahn (M) mit einer Reihe einzelner Schlitze versehen ist, die sich in Querrichtung zwischen einander gegenüberliegenden, unversehrten Kanten erstrecken.

5. Vorrichtung zum Dehnen in Querrichtung einer in Längsrichtung laufenden ununterbrochenen Bahn, z.B. eines Films oder eines Faser-Gewebes, aus einem organischen, synthetischen, thermoplastischen Polymer-Material, bestehend aus Teilen, die die Bahn (M) zwischen ihren Kanten ergreifen und die Bahn in Querrichtung dehnen, Teilen (H), mittels derer die Bahn während des Dehnungsvorganges erhitzt werden kann, und Teilen (29), die die Bahn freigeben, so daß sie sich abkühlen und festigen kann, dadurch gekennzeichnet, daß die Teile (11, 12, 17, 18) zum Ergreifen und Dehnen aus zwei Rädern (11, 12) mit im wesentlichen gleichen Abmessungen, symmetrisch in horizontaler Ausrichtung angeordnet und mit im wesentlichen gleicher Umfangsgeschwindigkeit, aber in entgegengesetzten Richtungen drehend, bestehen, daß jedes Rad eine peripherische Nut (27) aufweist, daß von zwei endlosen Riemen (17, 18) je einer um ein Rad (11, 12) herumläuft, daß jeder Riemen einen komplimentären Querschnitt zu dem Querschnitt der Nut (27) hat, in der er ruht, daß die Räder (11, 12) und die Riemen (17, 18) zwei auseinanderlaufende, bogenförmige Wege bilden und insofern zusammenarbeiten, als sie einander gegenüberliegende Kanten der Bahn zwischen sich erfassen und die Kanten auf dem bogenförmigen Weg über ein vorherbestimmtes Stück von einer Länge bewegen, die etwa ein Viertel bis etwa die Hälfte des ganzen Umfanges der Räder (11, 12) ist, wobei die Bahn (M) in Querrichtung gedehnt wird.

6. Vorrichtung nach Anspruch 5, dadurch gekennzeichnet, daß jedes Rad (11, 12) außerdem mit einer peripherischen Nut (27') versehen ist, die mit einem zusätzlichen Riemen (17', 18') zusammenwirkt, um eine schlauchförmige Bahn (M'), z.B. einen Film oder ein Gewebe, zwecks Dehnung lösbar zu erfassen.

7. Vorrichtung nach Anspruch 6, dadurch gekennzeichnet, daß die Bahn schlauchförmig ist und daß ein Schneidwerkzeug (33) zwischen den beiden peripherischen Nuten (17, 27') angeordnet ist, um die Schlauchbahn (M') im Bereich beider Kanten bei Beendigung des Dehnvorganges aufzuschneiden.

**Revendications**

1. Procédé d'étirage transversal d'un film continu, d'une bande fibreuse ou d'un produit similaire en une matière polymérique thermoplastique synthétique organique, défilant dans une direction longitudinale, comprenant les étapes consistant à saisir le film, la bande ou le produit similaire (M) au niveau de ses lisières opposées, à étirer transversalement le film, la bande ou le produit similaire (M) tout en le ou la chauffant, et à libérer le film, la bande ou le produit similaire (M) après étirage, pour lui permettre de refroidir et de se fixer, caractérisé en ce que le film, la bande ou le produit similaire (M) est étiré par (a) préhension des lisières respectivement entre (i) le pourtour de chacune des poulies d'une paire de poulies disposées symétriquement, ayant sensiblement les mêmes dimensions et tournant sensiblement à la même vitesse périphérique dans le même plan mais en sens contraires, et (ii) chacune des courroies d'un paire de courroies sans fin entraînées autour et défilant avec la poulie correspondante, les poulies et les courroies formant entre elles deux trajectoires divergentes en forme d'arcs, et (b) déplacement des lisières le long des trajectoires en forme d'arcs respectives sur une distance circonférentielle prédéterminée d'environ un quart à environ la moitié de la circonférence totale des poulies.

2. Procédé tel que défini dans la revendication 1, dans lequel le film de départ (M') a une forme tubulaire, est saisi au niveau de chacune de ses parties de lisière, aussi bien de l'intérieur que de l'extérieur, entre les poulies et les courroies respectives, en même temps qu'il est étiré, et est ouvert par découpage au niveau des parties de lisière après la fin de l'étirage.

3. Procédé tel que défini dans la revendication 1 ou 2, dans lequel le film, land bande ou le produit similaire (M) est pourvu d'une série de fentes continues dirigées transversalement entre ses lisières vierges opposées.

4. Procédé tel que défini dans la revendication 1 ou 2, dans lequel le film, la bande ou le produit similaire (M) est pourvu d'une série de fentes individuelles dirigées transversalement entre ses lisières vierges opposées.

5. Appareil d'étirage transversal d'un film continu, d'une bande fibreuse ou d'un produit similaire en une matière polymérique thermoplastique synthétique organique, défilant dans une direction longitudinale, comprenant des moyens pour saisir le film, la bande ou le produit similaire (M) entre ses lisières, et pour étirer transversalement le film, la bande ou le produit similaire (M), des moyens (H) pour chauffer le film, la bande ou le produit similaire (M) pendant l'étirage, et des moyens (29) pour libérer le film, la bande ou le produit similaire (M), après étirage, afin de lui permettre de refroidir et de se fixer, caractérisé en ce que les moyens de préhension et d'étirage (11, 12, 17, 18) comprennent deux poulies (11, 12) ayant sensiblement les mêmes dimensions, disposées symétriquement en alignement horizontal et pouvant tourner sensiblement à la même vitesse périphérique mais en sens contraires, chaque poulie comportant une gorge périphérique (27), et deux courroies sans fin (17, 18) entraînées chacune autour de la poulie respective (11, 12) et ayant une section droite complémentaire de celle des gorges (27) dans lesquelles elles s'engagent, les poulies (11, 12) et les courroies (17, 18) formant deux trajectoires divergentes en forme d'arcs et coopérant pour saisir entre elles les lisières opposées du film, de la bande ou du produit similaire (M), et pour déplacer les lisières le long des trajectoires en forme d'arcs respectives sur une distance prédéterminée d'environ un quart à environ la moitié de la circonférence totale des poulies (11, 12), étirant ainsi transversalement le film, la bande ou le produit similaire (M).

6. Appareil tel que défini dans la revendication 5, dans lequel chacune des poulies (11, 12) est pourvue d'une autre gorge périphérique (27') pouvant recevoir une courroie supplémentaire respective (17', 18') pour saisir de manière amovible un film, une bande ou un produit similaire (M') de forme tubulaire à étirer.

7. Appareil tel que défini dans la revendication 6, dans lequel le film est tubulaire et un couteau (33) est interposé entre les deux gorges périphériques (17, 27') pour ouvrir par découpage le film, la bande ou le produit similaire (M') de forme tubulaire, au niveau de chaque lisière après la fin de l'étirage.

FIG. 1

FIG. 2

FIG. 3

# FIG. 4

# FIG. 5

# FIG. 6

# FIG. 7